# EUROPÄISCHE PATENTSCHRIFT

(11) **EP 2 156 742 B1**
(45) Veröffentlichungstag und Bekanntmachung des Hinweises auf die Patenterteilung: **05.09.2012**
(21) Anmeldenummer: 09009719.7
(22) Anmeldetag: 28.07.2009
(51) Int. Cl.: A22C 9/00, A22C 17/00, A23B 4/28, G01B 11/02

(54) **Vorrichtung zur Veredelung von Lebensmittelprodukten**
Device for processing food products
Dispositif d'enrichissement de produits alimentaires

(30) Priorität: 31.07.2008 DE 102008035948
(43) Veröffentlichungstag der Anmeldung: 24.02.2010
(73) Patentinhaber: Schröder Maschinenbau KG, 33824 Werther (DE)
(72) Erfinder: Danwerth, Peter J., 33803 Steinhagen (DE)
(74) Vertreter: Wiebusch, Manfred

(56) Entgegenhaltungen:
- EP-A- 0 879 561
- DE-A1- 3 034 284
- DE-A1- 3 716 802
- DE-A1-102006 001 341
- GB-A- 2 444 117
- US-A1- 2006 090 655

## Beschreibung

Die Erfindung betrifft eine Vorrichtung zur Veredelung von Lebensmittelprodukten, mit einem Förderer zur Zufuhr der Lebensmittelprodukte, mehreren Arbeitswerkzeugen, die quer über den Förderer verteilt angeordnet und dazu ausgebildet sind, in die Lebensmittelprodukte einzudringen, einer Steuereinrichtung für die Arbeitswerkzeuge, und einer stromaufwärts der Arbeitswerkzeuge an dem Förderer angeordneten Abtastvorrichtung zur Abtastung der Dicke der Lebensmittelprodukte.

Als ein Beispiel für eine solche Vorrichtung kann eine Pökelmaschine genannt werden, bei der Pökellake mit Nadeln in die Fleischprodukte injiziert wird. Die Arbeitswerkzeuge werden dann durch die Nadeln gebildet.

Ein weiteres Beispiel ist ein sogenannter Steaker, mit dem Fleischprodukte dadurch zarter gemacht werden, daß mit Messern in das Fleisch eingeschnitten wird. In diesem Fall werden die Arbeitswerkzeuge durch die Messer gebildet.

Es sind Pökelmaschinen bekannt, bei denen der Hubweg der Nadeln verstellt und somit an die jeweilige Dicke der zu pökelnden Fleischprodukte angepaßt werden kann.

Eine Vorrichtung nach dem Oberbegriff des Anspruchs 1 ist aus DE 37 16 802 A1 bekannt. Ähnliche Vorrichtungen werden in GB-A-2 444 117, US 2006/090655 A1, EP-A-0 879 561 und DE 30 34 284 A1 beschrieben.

Aufgabe der Erfindung ist es, die Steuerung der Arbeitswerkzeuge noch besser an die jeweiligen Lebensmittelprodukte anzupassen.

Diese Aufgabe wird erfindungsgemäß dadurch gelöst, daß die die Abtastvorrichtung dazu eingerichtet ist, das Profil der auf dem Förderer zugeführten Lebensmittelprodukte über die Breite des Förderers abzutasten, und daß die Steuereinrichtung dazu ausgebildet ist, die Arbeitswerkzeuge in Abhängigkeit vom dem abgetasteten Profil zu steuern.

Die Abtastung des Profils der Lebensmittelprodukte erlaubt es, die Arbeitswerkzeuge so zu steuern, daß ihre Arbeitsweise und/oder ihre Eindringtiefe jeweils an die lokale Dicke der Lebensmittelprodukte angepaßt ist. Außerdem kann die Aktivität der Arbeitswerkzeuge auf diejenigen Zonen in Breitenrichtung des Förderers beschränkt werden, in denen sich tatsächlich Lebensmittelprodukte befinden.

Die Vorrichtung eignet sich für ein Verfahren zur Veredelung von Lebensmittelprodukten, bei dem mehrere Arbeitswerkzeuge, die quer über einen zur Zufuhr der Lebensmittelprodukte dienenden Förderer verteilt angeordnet sind, so gesteuert werden, daß sie in die Lebensmittelprodukte eindringen, dadurch gekennzeichnet, daß stromaufwärts der Arbeitswerkzeuge das Profil der auf dem Förderer zugeführten Lebensmittelprodukte abgetastet wird und die Arbeitswerkzeuge in Abhängigkeit von dem abgetasteten Profil gesteuert werden.

Vorteilhafte Ausgestaltungen der Erfindung sind in den Unteransprüchen angegeben.

Bei der Abtastvorrichtung kann es sich um eine mechanische oder optische (Laser-) Abtastvorrichtung handeln oder auch um eine Ultraschall-Abtastvorrichtung. Der sensitive Bereich der Abtastvorrichtung kann sich über die gesamte Breite des Förderers erstrecken, so daß das Profil der Lebensmittelprodukte auf einer quer zu dem Förderer verlaufenden Linie simultan abgetastet werden kann. Wahlweise kann die Abtastvorrichtung jedoch auch auf einem quer über dem Förderer bewegbaren Wagen angeordnet sein, so daß das Profil während einer Abtastbewegung des Wagens aufgenommen wird.

Wenn es sich bei der erfindungsgemäßen Vorrichtung um eine Pökelvorrichtung oder, allgemeiner, einen Injektor zur Injektion von Flüssigkeiten in die Lebensmittelprodukte handelt, so kann der Hub der Nadeln individuell für jede einzelne Nadel oder wahlweise auch jeweils für bestimmte Gruppen von Nadeln in Abhängigkeit von dem Profil der Lebensmittelprodukte gesteuert werden, so daß unnötige Leerhübe und unnötig weite Hubwege vermieden werden. Ebenso können die Zeiten gesteuert werden, während denen Lake in die Lebensmittelprodukte injiziert wird. Insbesondere kann die Steuerung so erfolgen, daß jede Nadel erst dann mit der Injektion beginnt, wenn sie sich innerhalb des Lebensmittelprodukts befindet. Auf diese Weise lassen sich die Verluste an Pökellake minimieren. Außerdem läßt sich durch die Steuerung der Einspritzung der Lake in Abhängigkeit von dem aufgenommenen Profil auch eine homogenere Verteilung der Lake in Lebensmittelprodukten erreichen.

Bei einer erfindungsgemäßen Vorrichtung zur Injektion von Flüssigkeiten in die Lebensmittelprodukte ist bevorzugt die Steuereinrichtung dazu ausgebildet, anhand der Daten der Abtastvorrichtung das Volumen und/oder die mittlere Höhe der Lebensmittelprodukte zu berechnen, die in einem Arbeitstakt des Nadelträgers bearbeitet werden, und das Sollvolumen der zu injizierenden Flüssigkeit und/oder eine Soll-Höhe eines Niederhalters zu berechnen, der beim Zurückziehen der Nadeln die Lebensmittelprodukte zurückhält.

Gemäß einer Weiterbildung dieser Vorrichtung ist ein Durchflußmesser zur Messung des Volumendurchsatzes der den Nadeln zugeführten Flüssigkeit vorgesehen, und die Steuereinrichtung umfaßt ein Integrationsglied zum Integrieren des gemessenen Volumendurchsatzes, einen Vergleicher zum Vergleich des integrierten Volumens mit dem Sollvolumen, und eine Ventilsteuerung, die die Zufuhr von Flüssigkeit zu den Nadeln unterbricht, sobald der integrierte Volumendurchsatz das Sollvolumen erreicht.

Im folgenden werden Ausführungsbeispiele anhand der Zeichnung näher erläutert.

Es zeigen:
- Fig. 1: eine Prinzipskizze einer erfindungsgemäßen Pökelvorrichtung;
- Fig. 2: eine schematische Stirnansicht der Pökelvorrichtung nach Figur 1 während eines Pökelvorgangs;
- Fig. 3: eine schematische Stirnansicht einer Pökelvorrichtung gemäß einem anderen Ausführungsbeispiel;
- Fig. 4: eine schematische Stirnansicht der Pökelvorrichtung nach Fig. 3 in einem anderen Stadium des Arbeitsablaufes; und
- Fig. 5: ein Blockdiagramm einer Steuereinrichtung der Pökelvorrichtung nach Fig. 3 und 4.

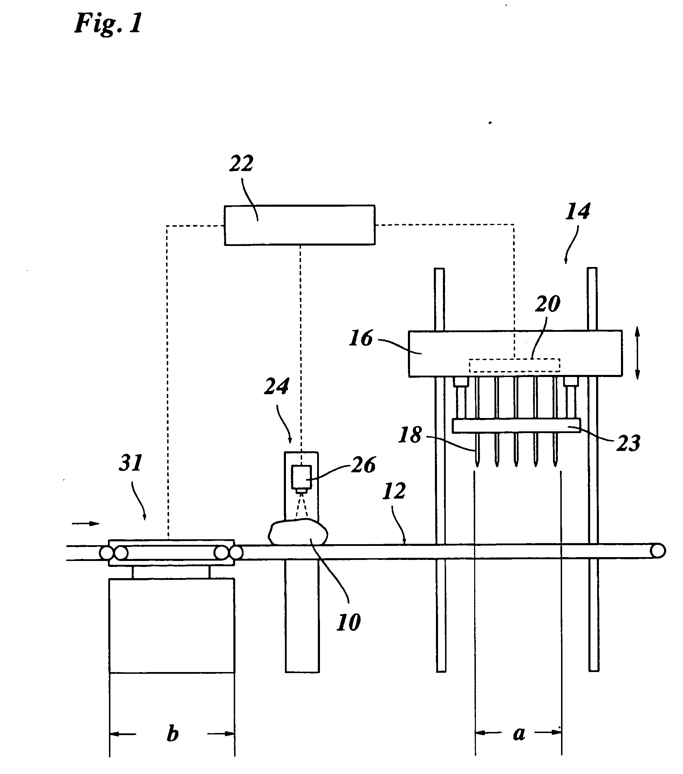

Die in Figur 1 gezeigte Vorrichtung dient zum Pökeln von Lebensmittelprodukten 10 und weist einen Förderer 12 auf, auf dem die Lebensmittelprodukte in Pfeilrichtung einer Pökelstation 14 zugeführt werden. In der Pökelstation ist oberhalb des Förderers 12 ein auf und ab bewegbarer Nadelträger 16 installiert, der in einer quer über den Förderer verlaufenden Zone eine Vielzahl von parallelen, nach unten vorspringenden Nadeln 18 trägt. Die Nadeln 18 sind als Hohlnadeln ausgebildet, und eine in dem Nadelträger 16 untergebrachte Ventilsteuerung 20 dient dazu, die Lakezufuhr zu den einzelnen Nadeln 18 zu steuern. Die Ventilsteuerung 20 wird ihrerseits durch eine elektronische Steuereinrichtung 22 angesteuert, die auch den Hub des Nadelträgers 16, den Antrieb des Förderers 12 und dergleichen steuern kann.

Die Nadeln 18 durchsetzen einen Niederhalter 23, der höhenverstellbar an dem Nadelträger 16 oder einem nicht gezeigten Gestell der Vorrichtung angeordnet ist.

Mit Hilfe des Förderers 12 werden die Lebensmittelprodukte 10 schrittweise vorgerückt, und wenn sie sich bei angehaltenem Förderer in einer Position unterhalb des Nadelträgers 16 befinden, so wird der Nadelträger abgesenkt, so daß die Nadeln 18 in die Lebensmittelprodukte 10 einstechen. Gleichzeitig wird über die Ventilsteuerung 20 die Lakezufuhr gesteuert, so daß Pökellake in die Lebensmittelprodukte 10 injiziert wird. Anschließend wird der Nadelträger 16 wieder angehoben, so daß die Nadeln 18 aus den Lebensmittelprodukten austreten können, und der Förderer transportiert die Produkte um einen Schritt weiter, so daß Pökellake in eine nachfolgende Charge von Lebensmittelprodukten injiziert werden kann.

Stromaufwärts der Pökelstation 14 ist an dem Förderer 12 eine Abtastvorrichtung 24 angeordnet, die im gezeigten Beispiel einen sich über die gesamte Breite des Förderers 12 erstreckenden optischen Abtastkopf 26, beispielsweise einen Laser-Abtastkopf, aufweist.

Die Abtastvorrichtung 24 dient dazu, das Profil der auf dem Förderer zugeführten Lebensmittelprodukte 10 aufzunehmen, während sie unter dem Abtastkopf 26 hindurchtransportiert werden. Auf diese Weise läßt sich mit der jeweils gewünschten Auflösung für jeden Punkt auf der Breite des Förderers 12 feststellen, wo sich die Lebensmittelprodukte befinden und welche Dicke sie haben. Diese Information wird an die Steuereinrichtung 22 gemeldet, die aus dem Abstand zwischen der Abtastvorrichtung 24 und der Pökelstation 14 und der Transportgeschwindigkeit des Förderers 12 den Zeitpunkt berechnet, zu dem sich Lebensmittelprodukte 10, deren Profil gerade abgetastet wurde, unter dem Nadelträger 16 befinden.

Wenn sich die Lebensmittelprodukte 10 dann unter dem Nadelträger 16 befinden und dieser abgesenkt wird, so wird die Ventilsteuerung 20 so angesteuert, daß an jeder Stelle über die Breite des Förderers 12 die den einzelnen Nadeln 18 zugeordneten Ventile erst dann geöffnet werden, wenn die betreffende Nadel in das Lebensmittelprodukt eingedrungen ist. Als Beispiel soll hier angenommen werden, daß die Nadeln 18 nur an ihrer Spitze oder in ihrem unteren Endabschnitt mit Austrittsöffnungen für die Pökellake versehen sind. So läßt sich durch die Steuerung der Einspritzzeiten sicherstellen, daß die Lake nur im Inneren der Lebensmittelprodukte 10 abgegeben wird und keine Lake außerhalb der Lebensmittelprodukte verspritzt wird.

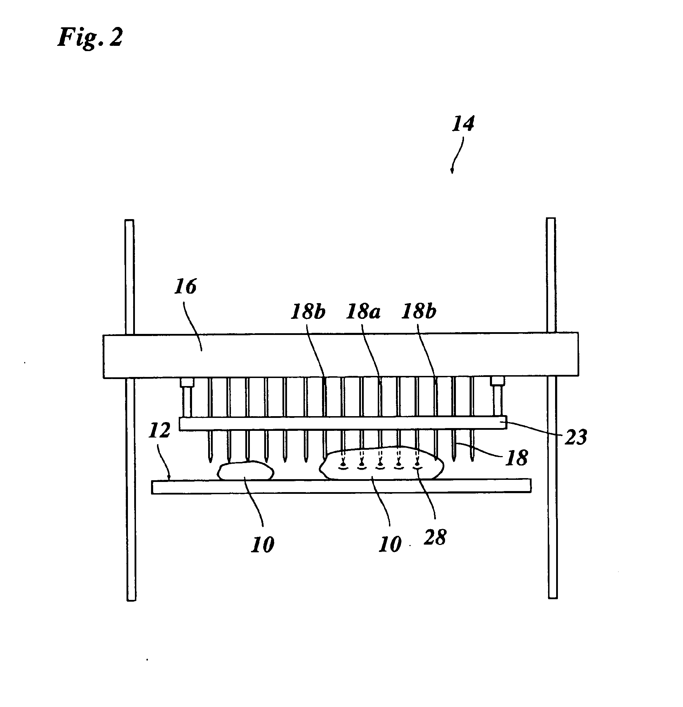

In Figur 2 ist die Pökelstation 14 in einer Stirnansicht dargestellt, also mit Blickrichtung in Transportrichtung des Förderers 12. Der Nadelträger 16 führt gerade einen Abwärtshub aus, hat jedoch noch nicht seine untere Totpunktstellung erreicht, so daß nur einige der Nadeln 18, hier mit 18a bezeichnet, in die Lebensmittelprodukte 10 einstechen. Für diese Nadeln 18a hat die Ventilsteuerung bereits die Lakezufuhr aktiviert, so daß Pökellake 28 in das betreffende Lebensmittelprodukt 10 injiziert wird. Im gezeigten Beispiel handelt es sich bei den Lebensmittelprodukten um zwei Fleischstücke, die nebeneinander auf dem Förderer 12 liegen, wobei das rechte Fleischstück größer und dicker ist. Bei dem linken Fleischstück sind deshalb die Nadeln 18 noch nicht eingedrungen, und deshalb ist die Lakezufuhr für diese Nadeln noch nicht aktiviert. Dasselbe gilt für die mit 18b bezeichneten Nadeln, die gerade erst im Begriff sind, in das rechte Fleischstück einzustechen. Da das Profil der Lebensmittelprodukte 10 bekannt ist, läßt sich der genaue Einspritzbeginn präzise an die lokale Dicke der Lebensmittelprodukte anpassen. Dort wo sich keine Lebensmittelprodukte auf dem Förderer 12 befinden, bleiben die Nadeln 18 gänzlich inaktiv.

Im gezeigten Beispiel wird die Lakezufuhr für jede der Nadeln 18 individuell gesteuert. Das gilt auch für jede der mehreren Nadeln 18, die zu einer in Längsrichtung des Förderers 12 verlaufenden Reihe gehören und von denen deshalb in der Figur 2 nur eine sichtbar ist (siehe aber Figur 1). Zweckmäßigerweise stimmen die Abstände in Längsrichtung des Förderers, in denen mit der Abtastvorrichtung 24 die einzelnen Profile aufgenommen werden, mit den Abständen der Nadeln 18 in Längsrichtung des Förderers 12 überein, so daß für jede der quer über den Förderer laufenden Reihen von Nadeln 18 das zugehörige Profil der Lebensmittelprodukte bekannt ist.

Wahlweise kann anhand des bekannten Profils auch der Hub jeder der Nadeln 18 oder bestimmter Gruppen von Nadeln individuell gesteuert werden.

Im Prinzip könnte die Ventilsteuerung 20 (Figur 1) auch so ausgebildet sein, daß sich mit ihr die Zufuhrmenge für jede einzelne Nadel 18 drosseln läßt, so daß der Lakedurchsatz variiert werden kann, während die Nadeln in das Lebensmittelprodukt einstechen. Anhand des bekannten Profils der Lebensmittelprodukte läßt sich der Verlauf des Einspritzdurchsatzes als Funktion der Höhe der Nadeln 18 jeweils an die Dicke des Lebensmittelprodukts anpassen, so daß unabhängig von Schwankungen der Dicke der Lebensmittelprodukte jeweils im Inneren des Produkts mehr Lake pro Volumeneinheit injiziert wird als in den Randzonen oder umgekehrt.

Ein entsprechendes Ergebnis läßt sich auch dadurch erzielen, daß bei konstantem Lakedurchsatz die Hubgeschwindigkeit der einzelnen Nadeln 18 individuell in Abhängigkeit von dem bekannten Profil der Lebensmittelprodukte gesteuert wird.

Während im gezeigten Beispiel eine laseroptische Abtastung des Profils der Lebensmittelprodukte 10 vorgesehen ist, kann alternativ auch eine mechanische Abtastung, beispielsweise mit Hilfe von Abtastrollen vorgesehen sein. Ebenso ist eine Abtastung mit Ultraschallsensoren denkbar. In all diesen Fällen kann sich der Meßkopf über die gesamte Breite des Förderers erstrecken oder auch nur über eine relativ schmale Zone des Förderers. Im letzteren Fall muß der Meßkopf während des Abtastvorgangs quer über den Förderer bewegt werden.

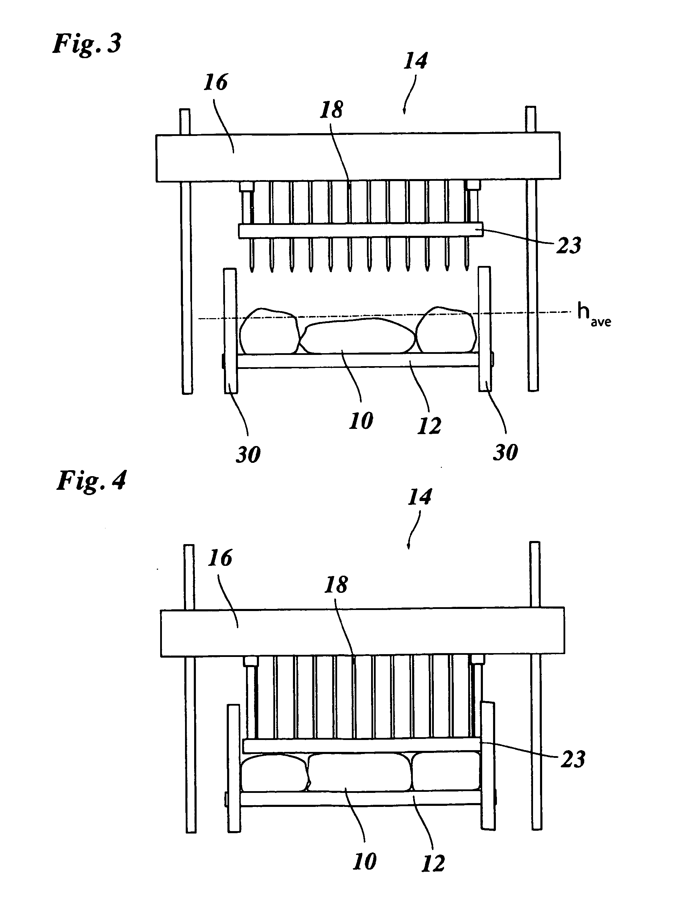

Fig. 3 zeigt ein Ausführungsbeispiel einer Pökelvorrichtung, bei der der Förderer 12 auf beiden Seiten durch Seitenwände 30 begrenzt ist, die zusammen mit dem Förderer einen U-förmigen Trog bilden, der von den Lebensmittelprodukten 10 nahezu vollständig ausgefüllt wird. Während jedes Arbeitstaktes des Nadelträgers 16 befindet sich eine bestimmte Charge der Lebensmittelprodukte 10 unter dem Nadelträger und damit im Arbeitsbereich der Nadeln 18. Mit Hilfe der Abtastvorrichtung 24 ist es nun möglich, das Gesamtvolumen dieser Charge zu berechnen. Wenn verlangt wird, daß das Volumen der in diese Charge zu injizierenden Lake einen bestimmten Prozentsatz des Gesamtvolumens der Lebensmittelprodukte betragen soll, so läßt sich das entsprechende Sollvolumen der Pökellake aus dem Gesamtvolumen der Charge berechnen.

In diesem Ausführungsbeispiel wird die Oberfläche der Lebensmittelprodukte 10 sowohl in Transportrichtung des Förderers als auch quer zur Transportrichtung mit hoher Auflösung abgetastet (z, B. deutlich höher als der Abstand der Nadeln 18 im Nadelträger 16). Zu jedem Zeitpunkt - und damit zu jeder Position der Lebensmittelprodukte 10 relativ zur Abtastvorrichtung 24 in Längsrichtung des Förderers - erhält man so die Querschnittsfläche der Gesamtheit der Lebensmittelprodukte. Wenn man diese Querschnittsflächen über die Zeit oder, äquivalent, über den Weg in Transportrichtung aufintegriert, erhält man das Volumen der Lebensmittelprodukte auf dem entsprechenden Abschnitt des Förderers. Wenn sich die Anordnung der Nadeln 18 in Transportrichtung über die Länge a erstreckt, wie in Fig. 1 gezeigt ist, und man die von der Abtastvorrichtung 24 erhaltenen Querschnittsflächen über dieselbe Länge a integriert, so erhält man das Volumen der Charge, die sich im Arbeitsbereich der Nadeln 18 befindet, wenn der Förderer den Weg von der Abtastvorrichtung 24 bis zur Pökelstation 14 zurückgelegt hat.

Ebenso lassen sich die mit der Abtastvorrichtung 24 gewonnenen Daten auch dazu nutzen, für die oben genannte Charge die mittlere Höhe hₐᵥₑ der Lebensmittelprodukte zu berechnen (Gesamtvolumen der Charge dividiert durch die von dieser Charge eingenommene Grundfläche). In Fig. 3 ist diese mittlere Höhe hₐᵥₑ durch eine strichpunktierte Linie angegeben.

Wenn es sich bei den Lebensmittelprodukten 10 um "weiche" Produkte handelt, also beispielsweise um Fleischstücke ohne Knochen, so kann durch geeignete Höheneinstellung des Niederhalters 23 erreicht werden, daß die Produkte, wenn der Nadelträger 16 und der Niederhalter 23 gemeinsam abgesenkt werden, durch den Niederhalter zu einem annähernd massiven Quader verformt werden, wie in Fig. 4 dargestellt ist. Dazu wird der Niederhalter 23 auf eine solche Höhe eingestellt, daß seine Unterseite in der in Fig. 4 gezeigten Position, bevor die Nadeln in die Lebensmittelprodukte einstechen, gerade die Höhe hₐᵥₑ hat.

Wenn dann der Nadelträger 16 und der Niederhalter 23 bei der gemeinsamen Abwärtsbewegung die in Fig. 4 gezeigte Position erreicht haben, wird der Niederhalter 23 vom Nadelträger 16 entkoppelt und relativ zum Gestell der Vorrichtung stationär gehalten, während sich der Nadelträger 16 mit den Nadeln 18 weiter absenkt, um die Lake in die Lebensmittelprodukte 10 zu injizieren. In diesem Fall kann die Lakezufuhr zu sämtlichen Nadeln 18 synchron gesteuert werden, und dennoch wird eine gleichmäßige Injektion der Lake in sämtliche Bereiche der Lebensmittelprodukte 10 erreicht.

Die Injektion kann dabei wahlweise nur während des Abwärtshubes oder auch sowohl während des Abwärtshubes als auch während des Aufwärtshubes der Nadeln erfolgen. Bei der Aufwärtsbewegung des Nadelträgers 16, wenn also die Nadeln aus den Lebensmittelprodukten herausgezogen werden, sorgt der Niederhalter 23 dafür, daß sich die Lebensmittelprodukte nicht nach oben bewegen, sondern von den Nadeln abgestreift werden. Sobald während des Aufwärtshubes wieder die in Fig. 4 gezeigte Position erreicht ist, wird der Nadelträger 23 wieder mit dem Nadelträger 16 gekoppelt und gemeinsam mit diesem weiter angehoben, so daß auf dem Förderer 12 die nächste Charge zugeführt werden kann. Die Höhe des Nadelträgers wird dann an die mittlere Höhe dieser neuen Charge angepaßt und es kann ein neuer Zyklus beginnen.

In Fig. 1 ist in den Förderer 12 stromaufwärts der Abtastvorrichtung 24 eine Durchlaufwaage 31 integriert, die zu jedem Zeitpunkt das Gesamtgewicht der auf der Waage liegenden Lebensmittelprodukte 10 mißt und an die Steuereinrichtung 22 meldet. Wenn man die mit der Abtastvorrichtung 24 gemessenen Querschnittsflächen der Lebensmittelprodukte über die Arbeitslänge b der Durchlaufwaage 31 integriert den Zeitversatz zwischen dem Passieren der Durchlaufwaage 31 und dem Passieren der Abtastvorrichtung 24 berücksichtigt, so erhält man das Volumen der Lebensmittelprodukte, deren Gewicht die Waage gemessen hat, und durch Division läßt sich die Dichte der Lebensmittelprodukte bestimmen. Die so erhaltene Dichte kann nun in die Bestimmung der Lakemenge einfließen, die pro Volumeneinheit in die Lebensmittelprodukte injiziert werden soll.

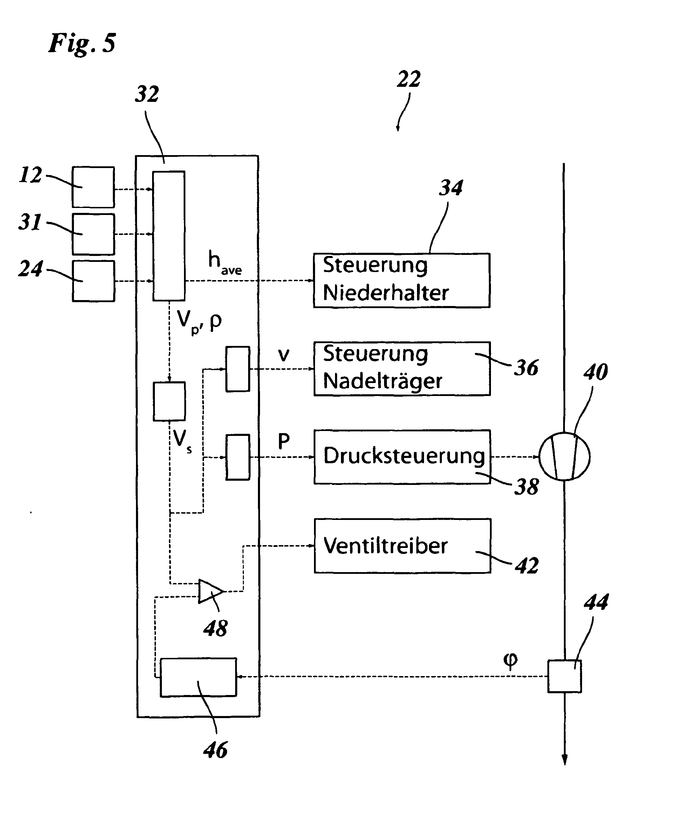

In Fig. 5 ist die Steuereinrichtung 22 für die oben beschriebene Pökelvorrichtung als Blockdiagramm dargestellt. Diese Vorrichtung umfaßt einen Hauptrechner 32, ein Steuersystem 34, das die Höheneinstellung des Niederhalters 23 steuert, ein Steuersystem 36 für die Hubbewegungen des Nadelträgers 16, ein Steuersystem 38, das eine Lakepumpe 40 ansteuert und somit den Druck bestimmt, mit dem die Lake zu den Nadeln 18 zugeführt wird, und einen Ventiltreiber 42 für die Ventilsteuerung 20.

Die Lakepumpe 40 saugt Lake aus einem nicht gezeigten Lakebehälter an und führt sie über einen Durchflußmesser 44 der Ventilsteuerung 20 in dem Nadelträger 16 zu, wo die Lake gleichmäßig auf sämtlichen Nadeln 18 verteilt wird. Je nach Ausführungsform kann dabei die Ventilsteuerung 20 ein gesondertes Ventil für jede einzelne Nadel oder ein einziges Ventil aufweisen, das sämtliche Nadeln steuert. Der Durchflußmesser 44 mißt auf irgendeine bekannte Weise den Volumendurchsatz ϕ, also das Volumen der Lake, das pro Zeiteinheit den Nadeln zugeführt wird. Dieser Volumendurchsatz ϕ wird an den Hauptrechner 32 gemeldet.

Der Hauptrechner 32 erhält Meßdaten von der Abtastvorrichtung 24 und der Durchlaufwaage 31 sowie Daten über den vom Förderer 12 zurückgelegten Weg als Funktion der Zeit. Bevor ein Arbeitstakt des Nadelträgers 16 beginnt, berechnet der Hauptrechner 32 anhand dieser Daten das Gesamtvolumen Vₚ, die Dichte ρ und die mittlere Höhe hₐᵥₑ der in diesem Arbeitstakt zu pökelnden Lebensmittelprodukte 10. Die mittlere Höhe hₐᵥₑ wird an das Steuersystem 34 für den Niederhalter übermittelt, der daraufhin auf die passende Höhe eingestellt wird, wie in Fig. 4 gezeigt ist. Aus dem Gesamtvolumen Vₚ und der Dichte der Lebensmittelprodukte berechnet der Hauptrechner 32 außerdem das Sollvolumen Vₛ der zu injizierenden Lake.

Da der Strömungswiderstand des Lakezufuhrsystems bekannt ist, läßt sich für einen gegebenen Lakedruck der Volumendurchsatz der Lake im voraus abschätzen. Anhand des Sollvolumens Vₛ, des abgeschätzten Volumendurchsatzes und der mittleren Höhe hₐᵥₑ legt nun der Hauptrechner 32 die Geschwindigkeit v, mit der der Nadelträger aus der in Fig. 4 gezeigten Position abgesenkt wird, so fest, daß das gesamte Sollvolumen gleichmäßig injiziert werden kann, während die Nadeln in die Lebensmittelprodukte einstechen. Wenn die Injektion nur während des Abwärtshubes der Nadeln erfolgt, wird die Geschwindigkeit v so berechnet, daß das Sollvolumen in der Zeit injiziert wird, in der sich die Nadeln aus der in Fig, 4 gezeigten Position bis zum unteren Totpunkt bewegen. Wenn die Injektion auch beim Aufwärtshub erfolgt, wird die Geschwindigkeit v so berechnet, daß das gesamte Volumen innerhalb der doppelten Zeit injiziert wird, nämlich während der Bewegung der Nadeln von der in Fig. 4 gezeigten Position bis zum unteren Totpunkt und zurück in die in Fig. 4 gezeigte Position.

Wenn sich dabei zeigt, daß, um dieses Ziel zu errechnen, die Geschwindigkeit v inakzeptabel hohe oder inakzeptabel niedrige Werte annehmen würde, so wird durch einen entsprechenden Befehl an das Steuersystem 38 der Lakedruck P entsprechend erhöht oder gesenkt.

Sobald die Nadeln 18 die in Fig. 4 gezeigte Position erreicht haben, also beginnen, in die Lebensmittelprodukte 10 einzustechen, wird durch die Ventilsteuerung 20 die Lakezufuhr aktiviert. Von diesem Zeitpunkt an wird mit Hilfe des Durchflußmessers 44 der tatsächliche Volumenstrom ϕ der Lake gemessen. Der Hauptrechner 32 enthält ein Integrationsglied 46, mit dem der Volumenstrom ϕ über die Zeit integriert wird. Ein Vergleicher 48 vergleicht das Integral des Volumenstroms, das im Lauf des Injektionsvorgangs stetig größer wird, mit dem Sollvolumen Vₛ, und sobald das Sollvolumen erreicht ist, wird an den Ventiltreiber 42 der Befehl ausgegeben, die Lakeventile zu schließen, so daß der Injektionsvorgang beendet wird. Dieser Zeitpunkt wird ungefähr dann erreicht werden, wenn die Nadeln den unteren Totpunkt erreicht haben oder, falls auch beim Aufwärtshub injiziert wird, wenn die Nadeln wieder die in Fig. 4 gezeigte Position erreicht haben. Falls der Abschaltzeitpunkt signifikant von dem Zeitpunkt abweicht, an dem der untere Totpunkt bzw. die Position nach Fig. 4 erreicht wird, so kann die im Hauptrechner 32 gespeicherte Funktion, die den Volumendurchsatz als Funktion des Lakedruckes P angibt, geeignet korrigiert werden, so daß im nächsten Takt die Geschwindigkeit v präziser berechnet werden kann.

Auf diese Weise läßt sich die injizierte Lakemenge präzise in Abhängigkeit vom Volumen Vₚ der Lebensmittelprodukte steuern.

## Patentansprüche

1. Vorrichtung zur Veredelung von Lebensmittelprodukten (10), mit einem Förderer (12) zur Zufuhr der Lebensmittelprodukte, mehreren Arbeitswerkzeugen (18), die quer über den Förderer verteilt angeordnet und dazu ausgebildet sind, in die Lebensmittelprodukte einzudringen, einer Steuereinrichtung (20, 22) für die Arbeitswerkzeuge, und einer stromaufwärts der Arbeitswerkzeuge (18) an dem Förderer (12) angeordneten Abtastvorrichtung (24) zur Abtastung der Dicke der Lebensmittelprodukte, **dadurch gekennzeichnet, daß** die Abtastvorrichtung (24) dazu eingerichtet ist, das Profil der auf dem Förderer (12) zugeführten Lebensmittelprodukte (10) über die Breite des Förderers abzutasten, und daß die Steuereinrichtung (20, 22) dazu ausgebildet ist, die Arbeitswerkzeuge in Abhängigkeit von dem abgetasteten Profil zu steuern.

2. Vorrichtung nach Anspruch 1, bei der die Abtastvorrichtung (24) eine optische Abtastvorrichtung ist.

3. Vorrichtung nach einem der vorstehenden Ansprüche, bei der die Abtastvorrichtung (24) einen Abtastkopf (26) aufweist, der dazu ausgebildet ist, das Profil der Lebensmittelprodukte (10) auf der gesamten Breite des Förderers (12) simultan aufzunehmen.

4. Vorrichtung nach einem der Ansprüche 1 bis 3, bei der der Abtastkopf in Querrichtung des Förderers (12) beweglich ist.

5. Vorrichtung nach einem der vorstehenden Ansprüche, in der Form einer Injektors mit Nadeln (18) als Arbeitswerkzeugen.

6. Vorrichtung nach Anspruch 5, bei der die Steuereinrichtung (20, 22) dazu ausgebildet ist, die Flüssigkeitszufuhr zu den Nadeln (18) in Abhängigkeit von dem abgetasteten Profil zu steuern.

7. Vorrichtung nach Anspruch 5 oder 6, mit einem Durchflußmesser (44) zur Messung des Volumendurchsatzes (φ) der den Nadeln (18) zugeführten Flüssigkeit.

8. Vorrichtung nach einem der Ansprüche 5 bis 7, bei der die Steuereinrichtung (20, 22) dazu ausgebildet ist, anhand der Daten der Abtastvorrichtung (24) das Volumen (Vp) der in einem Arbeitstakt der Nadeln (18) bearbeiteten Lebensmittelprodukte (10) zu berechnen.

9. Vorrichtung nach einem der Ansprüche 5 bis 8, bei der die Steuereinrichtung (20, 22) dazu ausgebildet ist, anhand der Daten der Abtastvorrichtung (24) die mittlere Höhe (have) der in einem Arbeitstakt der Nadeln (18) bearbeiteten Lebensmittelprodukte (10) zu berechnen.

10. Vorrichtung nach Anspruch 9, bei der die Nadeln (18) einen höhenverstellbaren Niederhalter (23) durchsetzen und die Steuereinrichtung (20, 22) dazu ausgebildet ist, den Niederhalter (23) auf eine von der berechneten mittleren Höhe (have) abhängigen Wert einzustellen.

11. Vorrichtung nach Anspruch 12, bei der der Förderer (12) die Form eines Troges hat.

12. Vorrichtung nach einem der Ansprüche 5 bis 11, bei der in den Förderer (12) eine Durchlaufwaage (31) integriert ist und die Steuereinrichtung (20, 22) dazu ausgebildet ist, anhand der Daten der Abtastvorrichtung (24) und der Durchlaufwaage (31) die Dichte (p) der Lebensmittelprodukte (10) zu berechnen.

## Claims

1. Device for processing food products (10), comprising a conveyer (12) for supplying the food products, a plurality of processing tools (18) arranged across the conveyer in distributed fashion and adapted to penetrate into the food products, a control device (20, 22) for the processing tools, and a scanning device (24) disposed on the conveyer (12) upstream of the processing tools (18) for scanning the thickness of the food products, **characterized in that** the scanning device (24) is adapted to scan the profile of the food products supplied on the conveyer (12) over the width of the conveyer, and **in that** the control device (20, 22) is adapted to control the processing tools in a manner dependent upon the scanned profile.

2. Device according to claim 1, wherein the scanning device (24) is an optical scanning device.

3. Device according to any of the preceding claims, wherein the scanning device (24) has a scanning head (26) that is adapted to record the profile of the food products (10) simultaneously on the entire width of the conveyer (12).

4. Device according to any of the claims 1 to 3, wherein the scanning head is movable into transverse direction of the conveyer (12).

5. Device according to any of the preceding claims, configured as an injector having needles (18) as processing tools.

6. Device according to claim 5, wherein the control device (20, 22) is adapted to control the supply of liquid to the needles (18) as dependent upon the scanned profile.

7. Device according to claim 5 or 6, comprising a flow meter (44) for measuring the volume flow rate (Φ) of the liquid supplied to needles (18).

8. Device according to any of the claims 5 to 7, wherein the control device (20, 22) is adapted to calculate, on the basis of the data supplied from the scanning device (24), the volume (Vp) of the food products (10) that are processed in one processing cycle of the needles (18).

9. Device according to any of the claims 5 to 8, wherein the control device (20, 22) is adapted to calculate, on the basis of the data supplied from the scanning device (24), the average height (hₐᵥₑ) of the food products (10) that are processed in one processing cycle of the needles (18).

10. Device according to claim 9, wherein the needles (18) penetrate a height-adjustable stripper (23), and the control device (20, 22) is adapted to adjust the stripper (23) to a height that is dependent upon the calculated value of the average height (hₐᵥₑ).

11. Device according to claim 12, wherein the conveyer (12) is shaped as a trough.

12. Device according to any of the claims 5 to 11, wherein a pass-through type scales is integrated into the conveyer (12), and the control device (20, 22) is adapted to calculate, on the basis of the data supplied by the scanning device (24) and the scales (31), the density (p) of the food products (10).

## Revendications

1. Dispositif pour transformer des produits alimentaires (10), comportant un convoyeur (12) pour le transport des produits alimentaires, plusieurs outils de travail (18) agencés transversalement de manière répartie sur le convoyeur et configurés de manière à pénétrer dans les produits alimentaires, un dispositif de commande (20, 22) pour les outils de travail, et un dispositif de balayage (24) agencé en amont des outils de travail (18) sur le convoyeur (12) pour balayer l'épaisseur des produits alimentaires, **caractérisé en ce que** le dispositif de balayage (24) est conçu de manière à balayer le profil des produits alimentaires (10) transportés sur le convoyeur (12) sur la largeur du convoyeur, et **en ce que** le dispositif de commande (20, 22) est conçu de manière à commander les outils de travail en fonction du profil balayé.

2. Dispositif selon la revendication 1, dans lequel le dispositif de balayage (24) est un dispositif de balayage optique.

3. Dispositif selon l'une quelconque des revendications précédentes, dans lequel le dispositif de balayage (24) comporte une tête de balayage (26) conçue de manière à détecter simultanément le profil des produits alimentaires (10) sur toute la largeur du convoyeur (12).

4. Dispositif selon l'une quelconque des revendications 1 à 3, dans lequel la tête de balayage est mobile dans une direction transversale du convoyeur (12).

5. Dispositif selon l'une quelconque des revendications précédentes, ayant la forme d'un injecteur avec des aiguilles (18) comme outils de travail.

6. Dispositif selon la revendication 5, dans lequel le dispositif de commande (20, 22) est conçu de manière à commander le transport de liquide jusqu'aux aiguilles (18) en fonction du profil balayé.

7. Dispositif selon la revendication 5 ou 6, comportant un mesureur de débit (44) pour mesurer le débit volumique (Φ) du liquide transporté jusqu'aux aiguilles (18).

8. Dispositif selon l'une quelconque des revendications 5 à 7, dans lequel le dispositif de commande (20, 22) est conçu de manière à calculer, au moyen des données du dispositif de balayage (24), le volume (Vp) des produits alimentaires (10) traités pendant un cycle de travail des aiguilles (18).

9. Dispositif selon l'une quelconque des revendications 5 à 8, dans lequel le dispositif de commande (20, 22) est conçu de manière à calculer, au moyen des données du dispositif de balayage (24), la hauteur moyenne (have) des produits alimentaires (10) traités pendant un cycle de travail des aiguilles (18).

10. Dispositif selon la revendication 9, dans lequel les aiguilles (18) traversent un support inférieur réglable en hauteur (23) et le dispositif de commande (20, 22) est conçu de manière à régler le support inférieur (23) à une valeur dépendante de la hauteur moyenne (have) calculée.

11. Dispositif selon la revendication 12, dans lequel le convoyeur (12) a la forme d'un bac.

12. Dispositif selon l'une quelconque des revendications 5 à 11, dans lequel une balance continue (31) est intégrée dans le convoyeur (12) et le dispositif de commande (20, 22) est conçu de manière à calculer, au moyen des données du dispositif de balayage (24) et de la balance continue (31), la densité (p) des produits alimentaires (10).
